(19) Europäisches Patentamt
European Patent Office
Office européen des brevets

(11) Publication number: 0 146 879
A2

(12) # EUROPEAN PATENT APPLICATION

(21) Application number: 84115247.3

(22) Date of filing: 12.12.84

(51) Int. Cl.$^4$: C 08 K 5/34
C 08 L 71/04

(30) Priority: 22.12.83 US 564419

(43) Date of publication of application:
03.07.85 Bulletin 85/27

(84) Designated Contracting States:
DE FR GB IT NL

(71) Applicant: GENERAL ELECTRIC COMPANY
1 River Road
Schenectady New York 12305(US)

(72) Inventor: Shu, Peter Hua-Cheng
2922 Old State Road
Schenectady New York 12303(US)

(74) Representative: Schüler, Horst, Dr. et al,
Kaiserstrasse 41
D-6000 Frankfurt/Main 1(DE)

(54) **Polyphenylene ether resin blends having improved ultraviolet light stability.**

(57) The ultraviolet light stability of polyphenylene ether resins and blends is improved by the addition of certain compounds which are intramolecular hybrids of a hindered amine and a hindered phenol. Plasticized, flame retardant and mineral filled/glass reinforced versions are also disclosed.

EP 0 146 879 A2

Croydon Printing Company Ltd

# POLYPHENYLENE ETHER RESIN BLENDS HAVING IMPROVED ULTRAVIOLET LIGHT STABILITY

## BACKGROUND OF THE INVENTION

The polyphenylene ether (oxide) resins are high performance engineering thermoplastics characterized by relatively high melt viscosities and softening points. The resins are useful in many commercial applications requiring high temperature resistance, and can be admixed with other polymers, such as polystyrene resins, to form blends which are extrudable or moldable into articles of various shapes and sizes. Polyphenylene ether resins and methods of their preparation are described in U.S. Patent Nos. 3,306,874 and 3,306,875 (Hay), in U.S. Patent Nos. 3,257,357 and 3,257,358 (Stamatoff), and elsewhere. Blends of polyphenylene ether resin and various styrenic polymers are disclosed by Cizek in U.S. Patent No. 3,383,435.

The polyphenylene ether resins are prone to undergoing discoloration, that is, yellowing during processing at elevated temperatures and, after molding, upon exposure to ultraviolet (UV) light for extended periods. To improve the color stability of these resins or of blends made of the resins, stabilizers are sometimes added, a number of which are disclosed in the patent literature. For instance, Bennett in U.S. Patent No. 3,563,934 teaches that an alkanolamine or a morpholine can be incorporated in a polyphenylene oxide resin to improve the flow and stability of the polymer during molding, and to permit lighter colored objects to be more easily molded from the polymer.

Murayama, et al. in U.S. Patent No. 3,640,928 disclose that various synthetic polymers can be stabilized against photo- and thermal deterioration by incorporating

certain sterically hindered piperidines.

The use of hindered phenols as thermal stabilizers for compositions of polyphenylene ethers (oxides) is described in U.S. Patent No. 3,700,750 (Yamanouchi, et al.) and U.S. Patent No. 4,184,999 (Olander).

Hydroxybenzyl derivatives of malonic acid which are useful as stabilizers are disclosed in German Offenlegun. 26 47 452.

Because polyphenylene ether resin blends are now used to produce a wider range of commercial articles, many of which are exposed to sunlight or bright indoor light during regular use, there is a desirability to find additional ways in which the UV-stability of the polymer can be improved without detracting from other important physical properties.

## INTRODUCTION TO THE INVENTION

It has now been discovered that the ultraviolet light stability of polyphenylene ether resins and blends is improved by the incorporation of a small amount of certain compounds which are intramolecular hybrids of a hindered amine and a hindered phenol.

The present kinds of stabilizers are characterized by a higher molecular weight and a lower volatility than many of the conventional UV stabilizing additives. A result is that the stabilizers are less likely to be volatilized and lost when the blends are subjected to the high temperatures typical for processing, which enables the use of smaller amounts.

The aforementioned stabilizing compounds, which are described in greater detail below, are useful in the following types of compositions in accordance with this invention:

1. Blends comprising (a) polyphenylene ether

resin and (b) stabilizer;

2. Blends comprising (a) polyphenylene ether resin, (b) stabilizer and (c) rubber modified, high impact poly(alkenyl aromatic)resin;

3. Blends comprising (a) polyphenylene ether resin, (b) stabilizer and (c) plasticizer, with or without (d) impact strength modifier;

4. Flame retardant versions of any of the foregoing; and

5. Filled versions of any of the foregoing.

DESCRIPTION OF THE INVENTION

In its broadest aspects, the invention comprises thermoplastic compositions which are admixtures of

(a) a polyphenylene ether resin; and

(b) an ultraviolet light stabilizing amount of one or more compounds having the formula

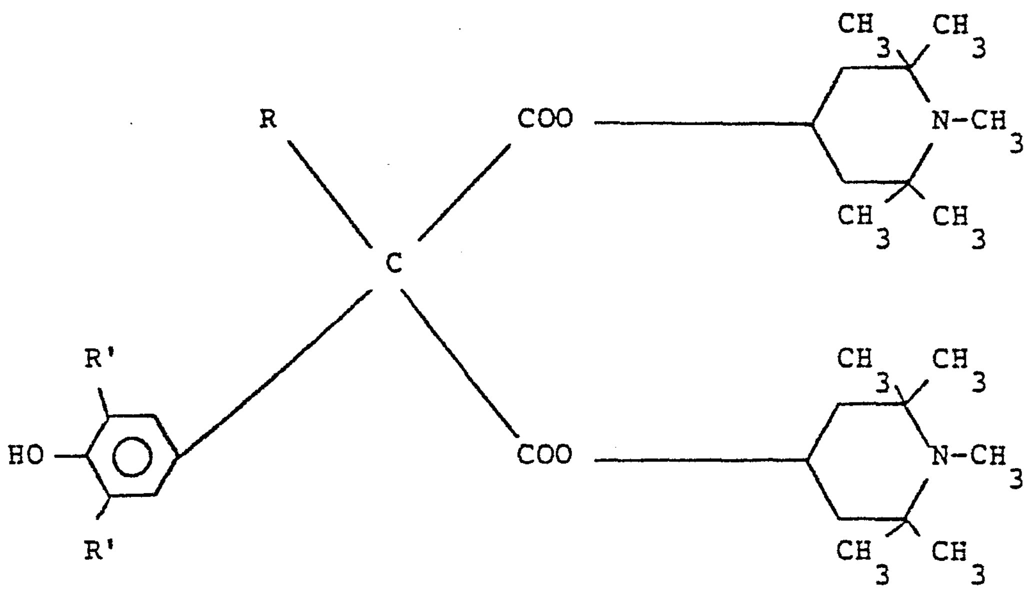

in which R is straight or branched alkyl having from 1 to 20 carbon atoms, or aryl; and each R' is, independently, straight or branched alkyl having from 1 to 10 carbon atoms, or aryl.

Examples of R above include benzyl, naphthyl, methyl,, ethyl, n-propyl, isopropyl, n-butyl, isobutyl, n-pentyl, isopentyl, n-hexyl, 2-methyl pentyl, n-heptyl, 2-methyl hexyl, 3-methyl hexyl, n-octyl, phenyl, and the like. Examples of R' include methyl, ethyl, n-propyl, isopropyl, n-butyl, isobutyl, n-pentyl, isopentyl, n-hexyl, 2-methyl pentyl, n-heptyl, 2-methyl hexyl, 3-methyl hexyl, n-octyl, phenyl, and the like.

Especially favored are compounds within the above formula where R is n-butyl, a commercial example

of which is sold by Ciba-Geigy Corp. under the trade designation TINUVIN 144.

The stabilizing compounds useful in this invention may also be made by referring to the procedures described in the above mentioned German patent publication.

Only small amounts, typically from about 0.1 to about 10 parts by weight of (b) for each 100 parts of the polymeric ingredients, are needed to impart satisfactory stability for most purposes.

Preferred polyphenylene ether resins are homopolymers or copolymers having units of the formula

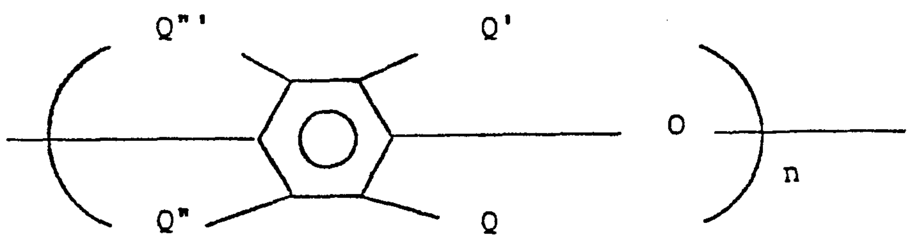

in which Q, Q', Q" and Q''' are, independently, selected from the group consisting of hydrogen, halogen, hydrocarbon radicals, halohydrocarbon radicals, hydrocarbonoxy radicals, and halohydrocarbonoxy radicals; and n represents the total number of monomer units and is an integer of at least about 20, and more usually at least 50.

The polyphenylene ether resins are, in general, self-condensation products of monohydric, monocyclic phenols produced by reacting the phenols with oxygen in the presence of complex metal catalysts, with the molecular weight being controlled by the reaction time, longer times providing a higher average number of repeating units. Particular procedures are known to those skilled in the art and are described in the patent literature, including the Hay and Stamatoff patents

mentioned above.

Suitable phenolic monomers include but are not limited to: 2,6-dimethylphenol; 2,6-diethylphenol; 2,6-dibutylphenol; 2,6-dilaurylphenol; 2,6-dipropylphenol; 2,6-diphenylphenol; 2-methyl-6-ethylphenol; 2-methyl-6-cyclohexylphenol; 2-methyl-6-tolylphenol; 2-methyl-6-methoxyphenol; 2-methyl-6-butylphenol; 2,6-dimethoxyphenol; 2,3,6-trimethylphenol; 2,3,5,6-tetramethylphenol; and 2,6-diethoxyphenol.

Some of the polymers which can be produced and which are within the above formula are: poly(2,6-dilauryl-1,4-phenylene)ether; poly(2,6-diphenyl-1,4-phenylene) ether; poly(2,6-dimethoxy-1,4-phenylene)ether; poly(2,6-diethoxy-1,4-phenylene)ether; poly(2-methoxy-6-ethoxy-1,4-phenylene)ether; poly(2-ethyl-6-stearyloxy-1,4-phenylene)ether; poly(2,6-dichloro-1,4-phenylene)ether; poly(2-methyl-6-phenyl-1,4-phenylene)ether; poly(2,6-dibenzyl-1,4-phenylene)ether; poly(2-ethoxy-1,4-phenylene) ether; poly(2-chloro-1,4-phenylene)ether; poly(2,6-dibromo-1,4-phenylene)ether; and the like.

Also included within the above formula are copolymers prepared from mixtures of phenolic monomers. Special mention is made of those based on the reaction of 2,6-dimethylphenol with other phenols, for example, with 2,3,6-trimethylphenol or 2-methyl-6-butylphenol, to produce the corresponding copolymer, for example, poly(2,6-dimethyl-co-2,3,6-trimethyl-1,4-phenylene)ether, poly(2,6-dimethyl-co-2-methyl-6-butyl-1,4-phenylene) ether, and so forth.

Especially preferred for use in this invention are homopolymers having alkyl substituents in the two positions ortho to the oxygen ether atom, that is, those of the above formula in which Q and Q' are alkyl, and particularly alkyl having from 1 to 4 carbon atoms. Most preferred is poly(2,6-dimethyl-1,4-phenylene ether).

The preferred rubber modified, high impact alkenyl aromatic resins, when used, are those in which the alkenyl aromatic portion is derived at least in part from compounds of the formula

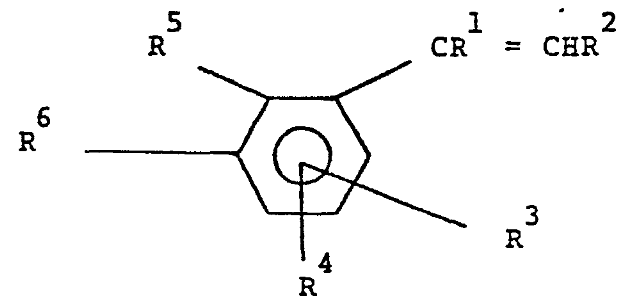

wherein $R^1$ and $R^2$ are selected from the group consisting of lower alkyl or alkenyl groups of from 1 to 6 carbon atoms, and hydrogen; $R^3$ and $R^4$ are selected from the group consisting of chloro, bromo, hydrogen and lower alkyl of from 1 to 6 carbon atoms; $R^5$ and $R^6$ are selected from the group consisting of hydrogen and lower alkyl and alkenyl groups of from 1 to 6 carbon atoms, or $R^5$ or $R^6$ may be concatenated together with hydrocarbyl groups to form a naphthyl group.

Compounds within the above formula include styrene and its homologs and analogs. In addition to styrene, examples include alpha-methyl styrene, para-methyl styrene, 2,4-dimethyl styrene, chlorostyrene, dichlorostyrene, bromostyrene, dibromostyrene, p-tert-butylstyrene, p-ethylstyrene, vinyl xylene, divinylbenzene, and vinyl naphthalene. Styrene is especially preferred.

Suitable rubber modifiers, which can be in admixture or interpolymerized with the alkenyl aromatic resin, include natural rubber, as well as synthetic rubbers such as polyisoprene, polybutadiene, polychloroprene, ethylene-propylene-diene terpolymers (EPDM rubber), styrene-butadiene copolymers (SBR rubber), styreneacrylonitrile copolymers (SAN), ethylene-propylene copolymers (EPR rubber), acrylonitrile rubbers, polyurethane rubbers and polyorganosiloxane (silicone) rubbers.

The rubber content can vary widely, but generally will range in amount from about 5 to about 45 percent by weight, depending on particular requirements of impact resistant modification.

The polyphenylene ether resin and the rubber modified, high impact poly(alkenyl aromatic)resin are admixable in virtually all proportions, for example, in a weight ratio between 95:5 and 5:95 of the two, and more often between 80:20 and 20:80.

The plasticizer will generally be any high boiling liquid or low melting solid having the effect of softening the composition and reducing the glass transition temperature of the polyphenylene ether resin. The plasticizer may be selected from among non-polymeric and polymeric materials known to exert these effects. By way of illustration, suitable types include linear aliphatic esters based on dibasic acids, such as adipates, azelates, and sebacates, or linear aliphatic esters based on phosphorus. Other suitable types include cyclic esters, such as phthalates, terephthalates, benzoates and trimellitates.

Especially preferred are organic phosphate plasticizers, and particularly aromatic phosphate compounds of the formula

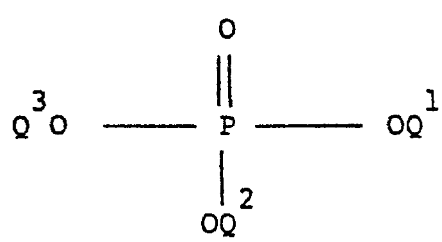

in which each Q represents the same or a different

radical selected independently from among alkyl, cycloalkyl, aryl, alkyl-substituted aryl, aryl-substituted alkyl, halogen, and hydrogen, with at least one Q always being aryl.

Examples include phenylbisodecyl phosphate, phenylbisneopentyl phosphate, phenylethylene hydrogen phosphate, phenyl-bis-(3,5,5'-trimethylhexyl phosphate), ethyldiphenyl phosphate, 2-ethylhexyl di(p-tolyl) phosphate, diphenyl hydrogen phosphate, bis(2-ethylhexyl) p-tolylphosphate, tritolyl phosphate, bis(2-ethylhexyl) phenyl phosphate, tri(nonyl-phenyl)phosphate, phenylmethyl hydrogen phosphate, di(dodecyl)p-tolyl phosphate, tricresyl phosphate, triphenyl phosphate, dibutylphenyl phosphate, 2-chloroethyldiphenyl phosphate, p-tolyl-bis-(2,5,5'-trimethylhexyl)phosphate, 2-ethylhexyldiphenyl phosphate, diphenyl hydrogen phosphate, and the like. Most preferred are triphenyl phosphate and its derivatives, for example, isopropylated triphenyl phosphate.

Also useful are polymeric plasticizing resins, such as polystyrene homopolymers, which exert a plasticizing function in the present blends.

In general, amounts up to about 30 parts by weight per 100 parts of the polymeric ingredients are employed in the plasticized embodiments, with particular amounts being dependent on specific requirements.

Plasticized compositions in accordance with the invention can and often do also include effective amounts of an impact strength modifier or modifiers. These may be selected from among polymeric materials customarily employed for this purpose. Typically, the impact modifiers will be copolymers or terpolymers of alkenyl aromatic compounds of the formula shown above with rubber or elastomer precursors. Preferred are linear block, graft or radial teleblock copolymers or styrene and butadiene, or of styrene and isoprene, as

well as hydrogenated versions thereof in which the unsaturation of the aliphatic portion has been reduced. The amounts are conventional.

The compositions of this invention may also contain other ingredients. These may be selected from among the various materials customarily employed with polyphenylene ether resins and blends as inert extenders or to enhance the chemical and physical properties. Examples include flame retardant agents, mineral fillers (for instance, clay, talc, mica and aluminum silicate), reinforcing agents (for instance, glass fibers, flakes or spheres, or titanate fibers), coloring agents (for instance, dyes or pigments), plasticizers, odor suppressants, mold release agents, flow enhancers (for instance, melt viscosity reducers), and so forth. These may be employed singly or in combination, in amounts which are conventional.

The flame retardant agent or agents may be selected from among materials containing chemical elements known for their ability to impart flame resistance, for example, bromine, chlorine, antimony, phosphorus and nitrogen. Included among them are various aliphatic and aromatic phosphates, phosphonates and phosphites; halogenated (brominated or chlorinated) organic compounds; halogenated organic compounds in admixture with antimony oxide; halogen-containing compounds in admixture with phosphorus compounds containing phosphorus-nitrogen bonds; halogenated (brominated or chlorinated) polymers such as polystyrene and aromatic polycarbonates or their lower molecular weight oligomeric counterparts.

Special mention is made of flame retardant organic phosphorus containing compounds, especially aromatic phosphates such as found among the compounds mentioned above, as well as di- and polyfunctional phosphates as disclosed in British Patent No. 2,043,083;

stable halogen-containing flame retardant compounds, especially brominated or chlorinated bis-phenoxy alkanes; and brominated or chlorinated polystyrenes. Especially preferred are triphenyl phosphate and isopropylated triphenyl phosphate, which have the capability of functioning as both a plasticizer and flame retardant in suitable proportions in the present blends. Amounts of up to about 30 parts by weight for each 100 parts of the polymeric components are typical for the flame retardant agent in the compositions of this invention.

Preparation of the compositions into shaped articles may be accomplished in any conventional manner. In one procedure, the ingredients are dry- or solution blended, the mixture is passed through a screw extruder at a temperature of from about 450 to about 650°F., the extrudate is cooled, chopped into pieces and then injection molded at a temperature of from about 450 to about 650°F.

The compositions may be prepared into any of the types of articles for which polyphenylene ether resin blends are known, and are especially advantageous for the manufacture of products intended for regular use in the outdoors, or indoors under bright artificial light, either of which can change the original color of the plastic surface. By way of illustration, the compositions of this invention can be made into grilles, headlamp bezels, wheelcovers and decorative trim on automobiles, home laundry and dishwasher consoles, air conditioner grilles, personal care or home use products such as coffee makers, food processors, curling irons and shower massagers, bases and housings for office business machines, TV cabinets, and so forth.

## DESCRIPTION OF THE SPECIFIC EMBODIMENTS

The invention is illustrated in the following examples, which are intended to show best or preferred embodiments and are not to be construed as limiting.

### EXAMPLE 1

A composition according to the invention was prepared by admixing 40 parts by weight of poly(2,6-dimethyl-1,4-phenylene ether)resin (PPO®, General Electric Co.), 60 parts by weight of rubber modified, high impact polystyrene resin (Foster Grant's 834 HIPS), 8 parts by weight of isopropylated triphenyl phosphate (KRONITEX-50, FMC Corp.), 1.5 part by weight of low density polyethylene, 0.5 part by weight of tridecyl phosphite, 0.15 part by weight of zinc sulfide, 0.15 part by weight of zinc oxide, 3 parts by weight of titanium dioxide, and 1 part by weight of a hindered phenol-hindered amine UV-stabilizer (TINUVIN 144, Ciba-Geigy, molecular weight 685, melting point range 146-150°C.). The mixture was shaped into test pieces by extrusion at 500°F. followed by injection molding at 490°F. (160°F. mold temperature).

For comparative purposes, a control blend containing the same ingredients in the same amounts, but with no TINUVIN 144 present, was prepared and molded under the same conditions.

The test pieces were exposed under a Xenon arc lamp, using a temperature of 145°F. and 50% relative humidity. The exposure time needed to reach a change in yellowness index, $\Delta$YI, equal to 1 (that is, one unit increase relative to the initial yellowness index), was 4.3 days for the blend according to the invention, and 1.5 days for the comparison (control) blend. In other words, it took approximately three times longer for the

blend of the invention to undergo the same degree of photoyellowing.

## EXAMPLES 2-5

The procedure of Example 1 was repeated to prepare and mold compositions in accordance with the invention containing 45 parts by weight of poly(2,6-dimethyl-1,4-phenylene ether)resin (PPO), 55 parts by weight of polybutadiene rubber modified, high impact polystyrene (FG 834), 13 parts by weight of isopropylated triphenyl phosphate (KRONITEX-50), 0.5 part by weight of tridecyl phosphite, 3 parts by weight of titanium dioxide, 0.15 part by weight of zinc oxide, 0.15 part by weight of zinc sulfide, 1.5 parts by weight of polyethylene, and TINUVIN 144 in the various amounts shown in Table 2, below. The test samples were exposed to fluorescent black light. A control sample, containing no TINUVIN 144, was also included.

TABLE 2. UV AGING OF POLYPHENYLENE ETHER RESIN BLEND UNDER FLUORESCENT BLACK LIGHT

| | | Δ YI | |
|---|---|---|---|
| Ex. | TIN 144 phr | at 2 days direct exposure | at 79 days under glass exposure |
| Control | None | 31.1 | 39 |
| 2 | 1 | 10.9 | 20.6 |
| 3 | 2 | 10.2 | 11.7 |
| 4 | 4 | 7.2 | 3.6 |
| 5 | 8 | 4.4 | 0 |

phr = parts by weight per 100 parts of PPO + HIPS

YI = change in yellowness index, relative to initial

All of the patents and/or publications mentioned above are incorporated herein by reference.

Other modifications and variations of the invention are possible in view of the disclosure which has been provided. For instance, clay filled or glass reinforced versions of the blends are possible. It should be understood, therefore, that changes may be made in the particular embodiments shown which are within the scope of the invention defined in the appended claims.

CLAIMS:

1. A thermoplastic composition, comprising an admixture of

(a) a polyphenylene ether resin; and

(b) an effective amount of an ultraviolet light stabilizer consisting essentially of one or more compounds having the formula

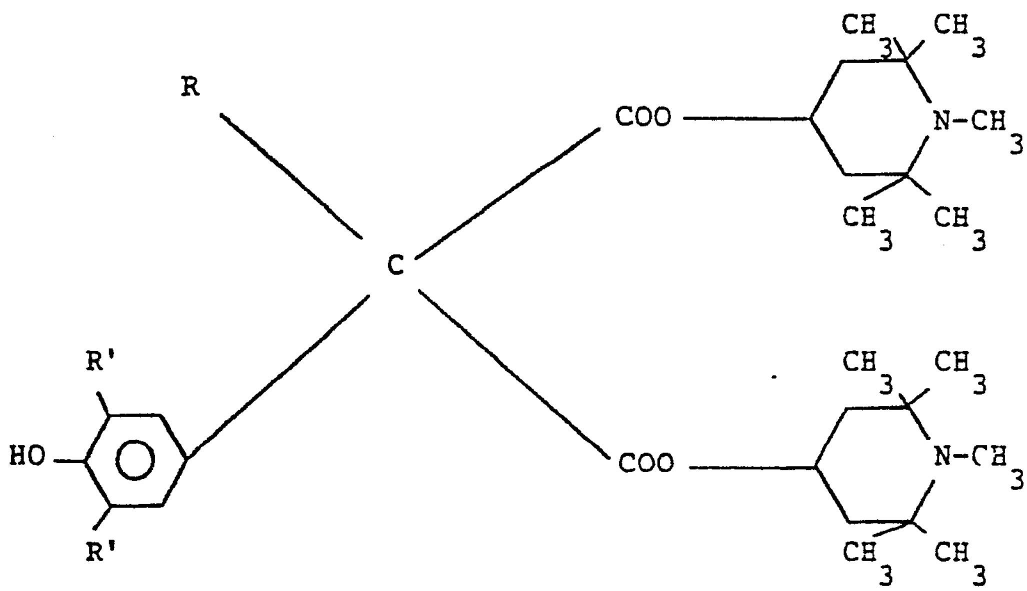

in which R is straight or branched alkyl having from 1 to 20 carbon atoms, or aryl; and each R' is, independently, straight or branched alkyl having from 1 to 10 carbon atoms, or aryl.

2. A composition according to Claim 1, in which the polyphenylene ether resin is a homopolymer or copolymer having units of the formula

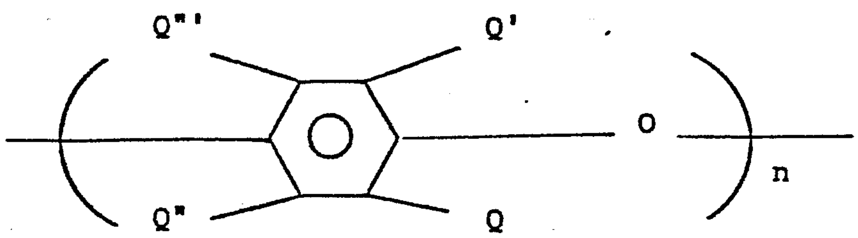

in which Q, Q', Q" and Q"' are, independently, selected from the group consisting of hydrogen, halogen, hydrocarbon radicals, halohydrocarbon radicals, hydrocarbonoxy radicals, and halohydrocarbonoxy radicals; and n represents the total number of monomer units and is an integer of at least about 20.

3. A composition according to Claim 1, in which the polyphenylene ether resin is poly(2,6-dimethyl-1,4-phenylene ether).

4. A composition according to Claim 1, in which for component (b) R is n-butyl.

5. A composition according to Claim 1, in which (b) is present in an amount from about 0.1 to about 10 parts by weight for each 100 parts of the polymeric ingredients.

6. A composition acccording to Claim 1, which includes (c) a rubber modified, high impact poly(alkenyl aromatic)resin.

7. A composition according to Claim 6, in which the alkenyl aromatic resin comprises at least some units of the formula

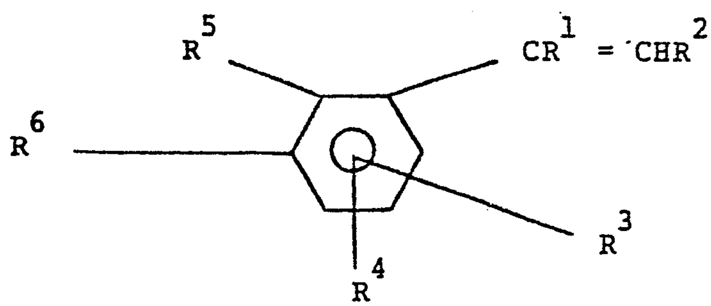

wherein $R^1$ and $R^2$ are selected from the group consisting of lower alkyl or alkenyl groups of from 1 to 6 carbon atoms and hydrogen; $R^3$ and $R^4$ are selected from the group consisting of chloro, bromo, hydrogen and lower alkyl of from 1 to 6 carbon atoms; $R^5$ and $R^6$ are selected from the group consisting of hydrogen and lower alkyl and alkenyl groups of from 1 to 6 carbon atoms, or $R^5$ and $R^6$ may be concatenated together with hydrocarbyl groups to form a naphthyl group.

8. A composition according to Claim 7, in which the alkenyl aromatic resin is polystyrene.

9. A composition according to Claim 8, in which the rubber modifier for the polystyrene is polybutadiene.

10. A composition acccording to Claim 6, in which the weight ratio of polyphenylene ether resin (a) and rubber modified, high impact poly(alkenyl aromatic) resin (c) is between 95:5 and 5:95.

11. A composition according to Claim 1, which includes an effective amount of (c) a plasticizer, with or without an impact modifier.

12. A composition according to Claim 11, in which the plasticizer is present in an amount up to about 30 parts by weight per 100 parts of the polymeric components in the composition.

13. A composition according to Claim 11, in which the plasticizer is an aromatic phosphate compound.

14. A composition according to Claim 13, in which the aromatic phosphate is triphenyl phosphate.

15. A composition according to Claim 14, in which the triphenyl phosphate is isopropylated.

16. A composition according to Claim 11, which also includes (d) an impact modifier.

17. A composition according to Claim 16, in which the impact modifier, (d), is a linear block, graft or radial teleblock copolymer or terpolymer of styrene and a diene, hydrogenated or non-hydrogenated.

18. A composition according to Claims 1, 6, 11 or 17 which includes a flame retardant amount of a flame retardant agent.

19. A composition according to Claim 18, in which the flame retardant agent is selected from among organic phosphates, brominated bis-phenoxy alkanes and halogenated polystyrenes.

20. A composition according to Claim 19, in which the flame retardant agent is an aromatic phosphate compound.

21. A composition according to Claim 20, in which the aromatic phosphate compound is isopropylated triphenyl phosphate.

22. A composition according to Claims 1, 6, 11 or 18, which includes a mineral filler and/or glass reinforcement.